# EUROPEAN PATENT APPLICATION

(11) **EP 2 243 939 A1**
(43) Date of publication of application: **27.10.2010**
(21) Application number: 08872563.5
(22) Date of filing: 09.12.2008
(51) Int. Cl.: F02B 37/24

(54) **TURBO CHARGER**

(30) Priority: 20.02.2008 JP 2008038423
(71) Applicant: IHI Corporation, Tokyo 135-8710 (JP)
(72) Inventor: MATSUYAMA, Yoshimitsu, Tokyo 135-8710 (JP); TAKAHASHI, Yukio, Tokyo 135-8710 (JP)
(74) Representative: Köhler, Walter
(86) International application number: PCT/JP2008/003657
(87) International publication number: WO 2009/104232

(57) **Abstract**

With a simple structure, gas is prevented from leaking from higher to lower pressure sides through a gap between a turbine housing and an exhaust nozzle. A turbocharger has an exhaust nozzle 9 arranged between a scroll passage 8 of a turbine housing 1 and a turbine impeller 4, a gap 19 formed between a rear surface 24 of the exhaust nozzle 9 and the turbine housing 1 and a sealing device 25 for closing the gap 19. The sealing device 25 has a seal member 29 which is C-shaped, i.e., an annulus with a part cut out to provide a slit, and has an inner peripheral end arranged along the turbine housing 1. The seal member 29 is configured such that, by the action of gas pressure in the scroll passage 8, the outer peripheral end 33 approaches the rear surface 24 of the exhaust nozzle 9, slit ends approach to each other, and the inner peripheral end 28 approaches the turbine housing 1, leading to reduction in diameter.

## Description

### Technical Field

The present invention relates to a turbocharger wherein gas is prevented from leaking from higher pressure side to lower pressure side through a gap between a turbine housing and an exhaust nozzle.

### Background Art

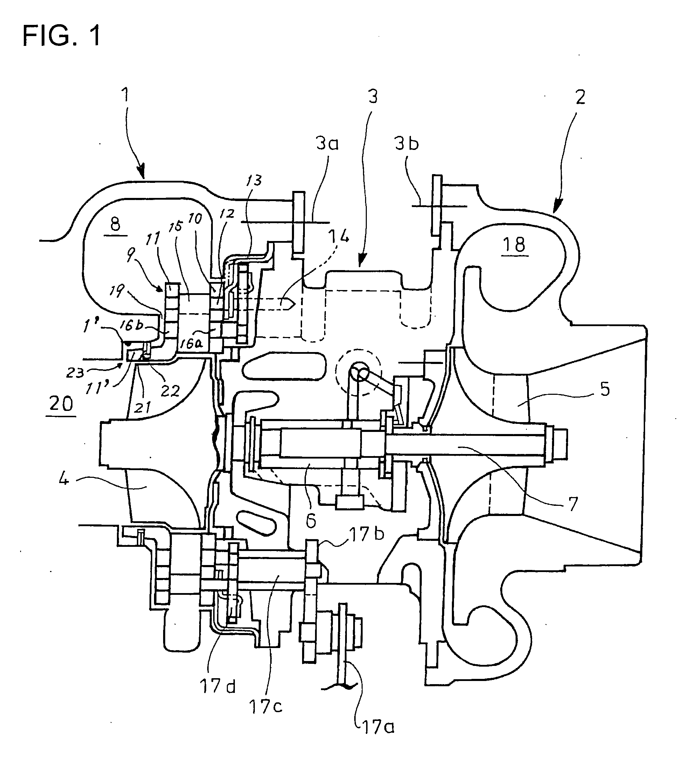

Fig. 1 shows a conventional variable displacement turbocharger to which the invention is applied. In the turbocharger, turbine and compressor housings 1 and 2 are integrally assembled through a bearing housing 3 by fastening bolts 3a and 3b, a turbine impeller 4 in the turbine housing 1 being connected to a compressor impeller 5 in the compressor housing 2 by a turbine shaft 7 rotatably supported via a bearing 6 in the bearing housing 3.

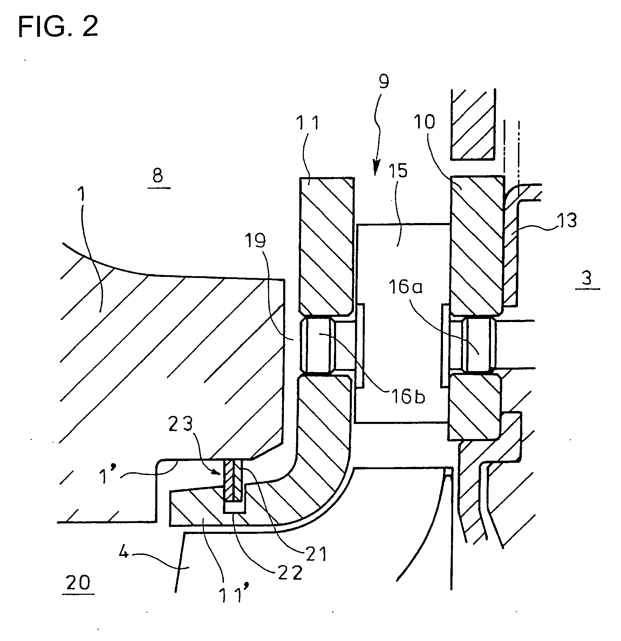

As shown in Fig. 2 in enlarged scale, the bearing housing 3 is provided, on its turbine housing 1 side, with an exhaust nozzle 9 by which the fluid (exhaust gas) introduced into a scroll passage 8 in the turbine housing 1 is guided to the turbine impeller 4.

The exhaust nozzle 9 comprises front and rear exhaust guide walls 10 and 11 on sides of the bearing and turbine housings 3 and 1, respectively, integrally assembled together with a required distance being retained between them by, for example, three fixing members 12 arranged circumferentially. Upon assembling of the turbine and bearing housings 1 and 3, an attachment member 13 fixed to a front surface of the front wall 10 (i.e., a surface adjacent to the bearing housing 3) is clamped by the housings 1 and 3 to fix the exhaust nozzle 9. Upon the assembling, the exhaust nozzle 9 is positioned relative to the bearing housing 3 by a positioning pin 14.

Annularly arranged between the front and rear walls 10 and 11 are a plurality of nozzle vanes 15 each of which is rotatably supported at least by a vane shaft 16a extending through the front wall 10. In Figs. 1 and 2, each of the nozzle vanes 15 is dually supported such that the nozzle vane 15 has vane shafts 16a and 16b fixed to opposite sides of the vane 15 and extending through the front and rear walls 10 and 11, respectively. Alternatively, the nozzle vane 15 may be supported in a cantilever manner only by the vane shaft 16a extending through the front wall 10.

In Fig. 1, reference numerals 17a, 17b, 17c and 17d designate a linked transmission mechanism for control of opening angle of the nozzle vanes 15; and 18, a scroll passage formed in the compressor housing 2.

Provided between the turbine housing 1 and the rear wall 11 of the exhaust nozzle 9 is a gap 19 which is unwanted by nature and which is however provided for countermeasure to, for example, possible thermal deformation of the turbine housing 1 between during being hot and during being cold and possible variations in accuracy of parts to be assembled.

The gap 19 may disadvantageously cause the exhaust gas in the passage 8 to vainly leak to a turbine impeller outlet 20. Thus, in order to close the gap 19, it has been proposed to arrange sealing piston rings 21 between an outer periphery on a downstream extension 11' of the rear wall 11 and an inner surface 1' of the turbine housing 1 confronting the extension 11' so as to prevent the gas leakage and absorb any thermal deformation (see Patent Literature 1).

In Patent Literature 1, as shown in Fig. 2, formed on the outer periphery of the extension 11' of the rear wall 11 is an annular groove 22 into which generally two sealing piston rings 21 are inserted with their closed gaps or cutouts being not aligned or overlapped with each other, thereby providing a sealing device 23. The piston rings 21 are pressed at their outer peripheries against the inner surface 1' of the turbine housing 1 by spring force of the piston rings themselves to prevent the gas leakage.
[Patent Literature 1] JP 2006-125588A

### Summary of Invention

### Technical Problems

However, even with the arrangement of the piston rings 21 on the annular groove 22 as shown in Fig. 2 for prevention of gas leakage, disadvantageously, prevention of gas leakage is still limitative. That is, the piston ring 21 is not an complete annulus but has a gap or cutout, so that even if the two piston rings 21 are arranged with their cutouts being not aligned, disadvantageously, gas may leak through the cutouts.

The piston rings 21, which are pressed for sealing against the inner surface 1' of the turbine housing 1 through their predetermined spring force, must have high strength. Thus, even if the inner surface 1' is machined with high degree of circularity, spacing may be produced between the inner surface 1' and the piston rings 21 when the piston rings 21 have slight distortion in circularity, disadvantageously resulting in gas leakage through outer peripheries of the piston rings 21.

The invention was made in view of the above and has its object to provide a turbocharger which is simple in structure and which can effectively prevent gas from leaking from higher pressure side to lower pressure side through a gap between a turbine housing and an exhaust nozzle.

### Solution to Problems

The invention is directed to a turbocharger having an exhaust nozzle between a scroll passage of a turbine housing and a turbine impeller, a gap between a rear surface of said exhaust nozzle and said turbine housing and a sealing device for closing said gap, **characterized in that** said sealing device comprises a seal member in the form of an annulus with a part cut out for provision of a slit and having an inner peripheral end arranged along said turbine housing, said seal member being configured such that, by the action of gas pressure in the scroll passage, an outer peripheral end of the member approaches the rear surface of the exhaust nozzle, slit ends of the member approach to each other and an inner peripheral end of the member approaches said turbine housing, resulting in decrease in diameter of the member.

It is preferable in the turbocharger that said slit is formed to have distance at the outer peripheral end greater than that at the inner peripheral end.

It is preferable in the turbocharger that said seal member is substantially frustoconical to have diameter gradually increased from turbine housing side to exhaust nozzle side.

### Advantageous Effects of Invention

In the invention, an inner peripheral end of a seal member is arranged along a step on a turbine housing so that, by the action of gas pressure in the scroll passage, an outer peripheral end of the seal member approaches the rear surface of the exhaust nozzle and, due to pressure difference between the gas pressure in the scroll passage and the pressure in the gap, the slit ends approach to each other and the inner peripheral end of the member approaches the step, leading to reduction in diameter of the seal member. As a result, the invention has an excellent effect that, with a simple structure, a gap between the turbine housing and the rear surface of the exhaust nozzle can be closed with high sealability.

### Brief Description of Drawings

Fig. 1 is a sectional side view of a conventional turbocharger;
Fig. 2 is a sectional side view of the nozzle and its vicinity in Fig. 1;
Fig. 3 is a sectional side view of a nozzle and its vicinity showing an embodiment of the invention;
Fig. 4 is a sectional side view which is different from Fig. 3 in how to support the nozzle vanes of the exhaust nozzle;
Fig. 5 is a front view of the seal member shown in Figs. 3 and 4;
Fig. 6 is a front view showing an example of slit shape in the seal member of Fig. 5;
Fig. 7 is a sectional side view showing a nozzle and its vicinity in a further embodiment of the invention; and
Fig. 8 is a sectional side view showing a nozzle and its vicinity in a variation of Fig. 7.

### Reference Signs List

- 1: turbine housing
- 4: turbine impeller
- 8: scroll passage
- 9: exhaust nozzle
- 19: gap
- 25: sealing device
- 28: inner peripheral end
- 29: seal member
- 29a, 29b: slit end
- 30: slit
- 33: outer peripheral end

### Description of Embodiments

Embodiments of the invention will be described in conjunction with the attached drawings.

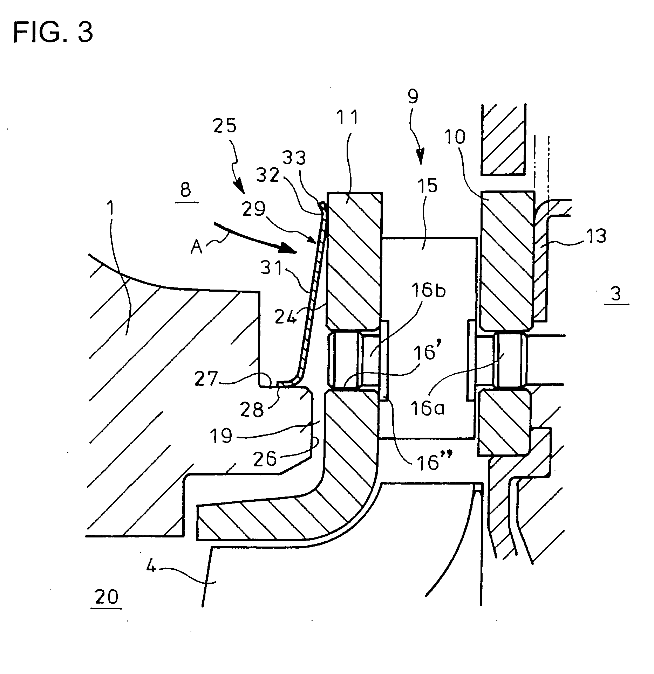

Fig. 3 is an embodiment of the invention applied to the turbocharger shown in Figs. 1 and 2 in which a sealing device 25 is arranged between a turbine housing 1 and a rear surface 24 of an exhaust nozzle 9 so as to prevent gas in a scroll passage 8 from leaking via a gap 19 between the housing 1 and the surface 24 of the nozzle 9 to the turbine impeller 4.

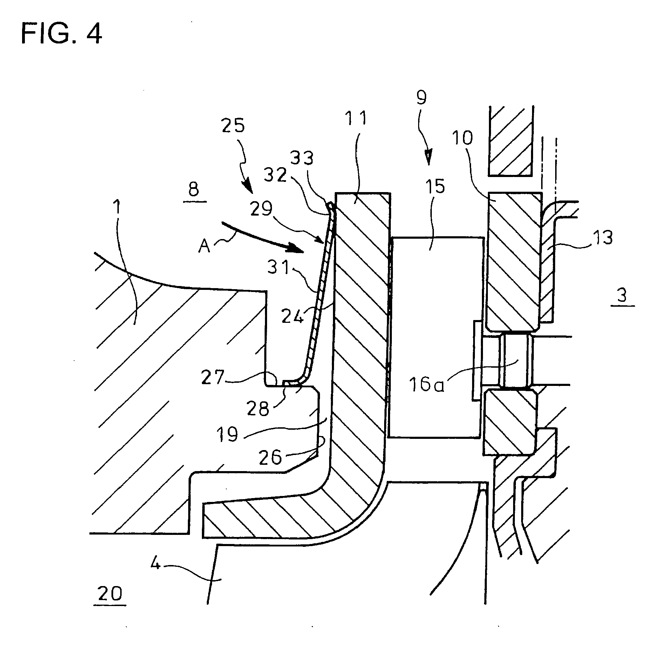

Fig. 3 shows an application to a turbocharger with the exhaust nozzle 9 where each of nozzle vanes 15 is supported at its opposite sides such that vane shafts 16a and 16b fixed to the opposite sides of the vane 15 extend through front and rear exhaust guide walls 10 and 11, respectively. The sealing device 25 is similarly applicable to the turbocharger with the exhaust nozzle 9 as shown in Fig. 4 where each of the nozzle vanes 15 is supported in a cantilever manner such that only the vane shaft 16a extends through the front exhaust guide wall 10.

In the sealing device 25, a cylindrical step 27 in parallel with the turbine shaft is formed on an outer periphery of a portion 26 of the turbine housing 1 confronting the rear surface 24 of the exhaust nozzle 9 to provide the gap 19; and a seal member 29 is arranged on and fitted at its inner peripheral end 28 to the step 27.

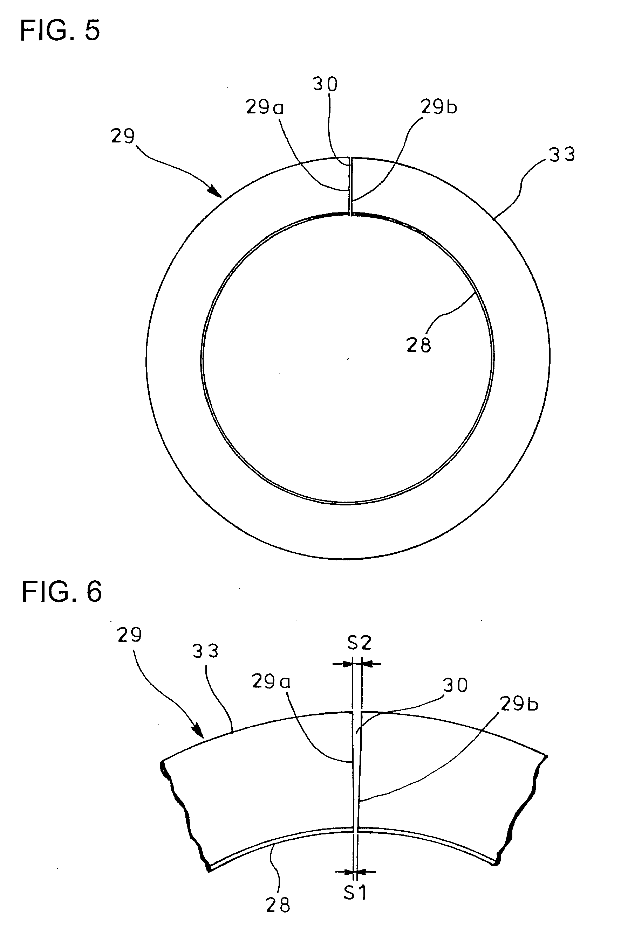

The seal member 29 comprises, as shown in Fig. 5, a substantially frustoconical metal sheet which is peripherally cut out into C-shape to provide a slit 30 with width of the order of 0.2-0.8 mm. The inner peripheral end 28 of the seal member 29 is bent, as shown in Figs. 3 and 4, in a direction away from the exhaust nozzle 9 to be fitted to the step 27. An outer peripheral end 33 of the seal member 29 comprises a conical straight portion 31 with diameter increased from the inner peripheral end 28 toward an outer peripheral end of the rear surface 24 of the exhaust nozzle 9 and a portion 32 curved for close contact with the rear surface 24 of the exhaust nozzle 9.

In this respect, the inner peripheral end 28 of the seal member 29 is fitted to the step 27 with slight spacing between them which allows its axial movement due to gas pressure in the scroll passage 8. The seal member 29 is formed to have deformation strength in terms of thickness which allows mutual approaching of the slit ends 29a and 29b due to the gas pressure in the scroll passage 8 for reduction in diameter.

More specifically, the gas pressure in the scroll passage 8 acts on the seal member 29; in this time, the slit 30 in communication with the gap 19 has pressure lower than the gas pressure in the scroll passage 8. As a result, due to the pressure difference between the gas pressure acting on the seal member 29 and the pressure at the slit 30, the slit ends 29a and 29b receive mutually attractive powers to approach to each other and the inner peripheral end 28 also approaches the step 27, leading to reduction in diameter of the seal member 29.

In order to make the slit ends 29a and 29b into substantially close contact with each other when the diameter of the seal member 29 is reduced as mentioned in the above, the slit 30 may be wedge-shaped as shown in Fig. 6 such that the distance of the same is gradually increased from distance S1 at the inner peripheral end 28 to distance S2 at the outer peripheral end 33.

Mode of operation of the above embodiment is as follows.

In the embodiment shown in Figs. 3 and 4, after the inner peripheral end 28 of the seal member 29 shown in Fig. 5 is fitted to the step 27 formed on the turbine housing 1, the turbine housing 1 is integrally assembled to the bearing housing 3, using a fastening bolt 3a as shown in Fig. 1.

As shown in Fig. 3 or Fig. 4, the seal member 29 arranged in the turbine housing 1 is urged by gas pressure in the scroll passage 8 (pressure difference between pressure in the scroll flow passage 8 and pressure in the gap 19) in a direction of arrow A, so that the curved portion 32 of the outer peripheral end 33 of the seal member 29 approaches and is closely fitted to the rear surface 24 of the rear wall 11 of the exhaust nozzle 9.

Meanwhile, since the pressure at the slit 30 (see Fig. 5) is lower than the gas pressure acting on the seal member 29, such pressure difference causes the slit ends 29a and 29b to approach to each other and at the same time the inner peripheral end 28 also approaches the step 27, which reduce the diameter of the seal member 29.

Thus, the outer peripheral end 32 of the seal member 29 is closely fitted to the rear surface 24 of the exhaust nozzle 9 so that the spacing between the same and the exhaust nozzle 9 is closed and the slit ends 29a and 29b of the seal member 29 approach to each other and the inner peripheral end 28 approaches the step 27, leading to reduction in diameter of the seal member 29. With such simple structure, the gap 19 between the turbine housing 1 and the exhaust nozzle 9 can be closed with high sealability. When, as shown in Fig. 6, the slit 30 is formed such that the distance S2 at the outer peripheral end 33 is greater than the distance S1 at the inner peripheral end 28, then as the seal member 29 is reduced in diameter, the slit ends 29a and 29b uniformly approach to each other into substantially close contact with each other, thereby further enhancing the sealability at slit 30.

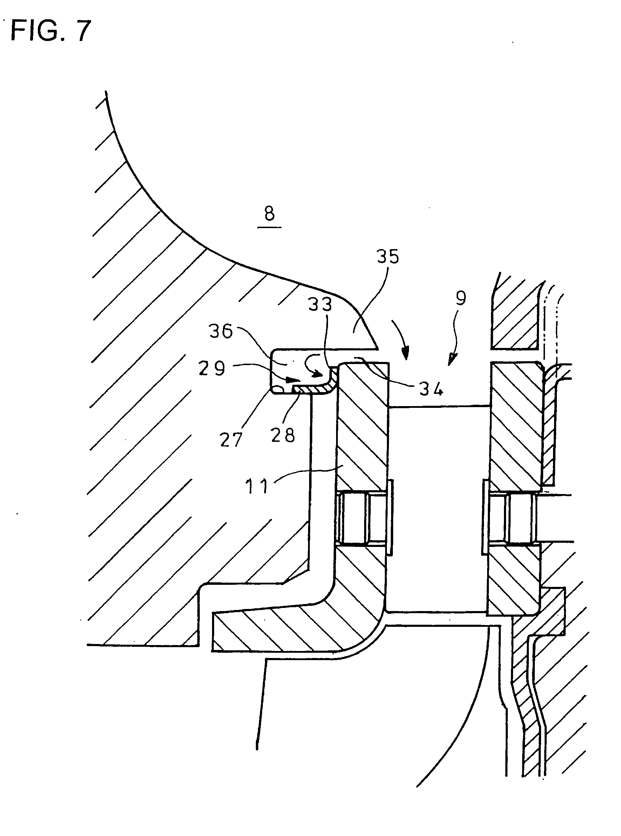

Fig. 7 shows a further embodiment of the invention in which a C-shaped seal member 29 has substantially L-shaped cross-section and is configured such that by the action of the gas pressure in the scroll passage 8 the outer peripheral end 33 approaches the rear surface of the rear wall 11 of the exhaust nozzle 9, and as shown in Fig. 5 the slit ends 29a and 29b approach to each other and the inner peripheral end 28 approaches the step 27 formed on the turbine housing 1, leading to reduction in diameter of the member. Also with the shape of the seal member 29 shown in Fig. 7, the exhaust gas pressure in the scroll passage 8 is utilized to close the gap 19 so that leakage of exhaust gas through the gap 19 can be reduced. In the Fig. 7 embodiment, a projection 35 extends from the turbine housing 1 to provide a guide spacing 34 at the outer periphery of the rear exhaust guide wall 11, a guide chamber 36 in communication with the guide spacing 34 being formed on the turbine housing 1 to thereby provide a step 27 on which the seal member 29 is arranged. Thus, according to the structure shown in Fig. 7, the exhaust gas from the scroll passage 8 is stably guided to the exhaust nozzle 9 by means of the projection 35.

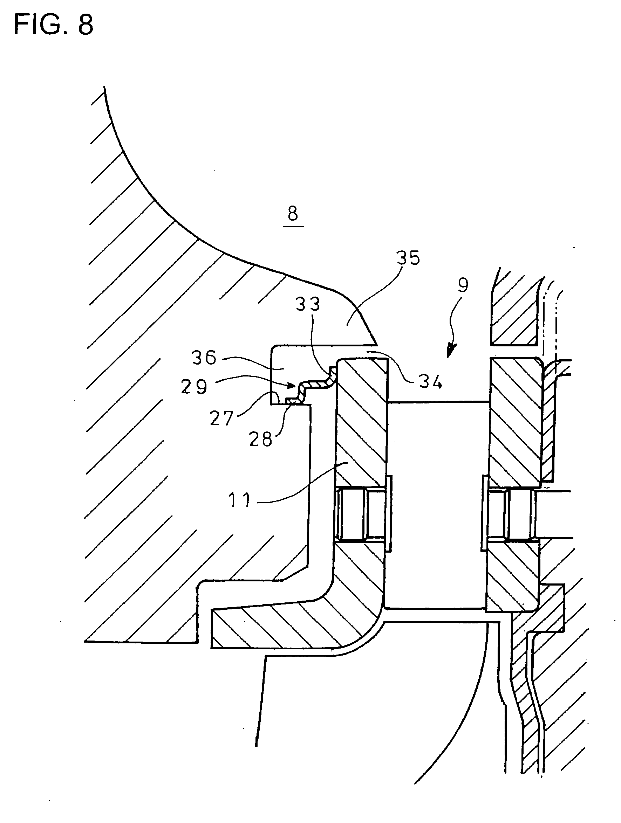

Alternatively, the C-shaped seal member 29 may be stepped as shown in Fig. 8 such that the inner peripheral end 28 extends along the step 27 toward the exhaust nozzle 9, extends radially outwardly and then extend in parallel with the turbine shaft toward the exhaust nozzle 9 so that the outer peripheral end 33 approaches the rear surface of the rear wall 11 of the exhaust nozzle 9; or it may be of other various shapes.

The above-mentioned seal member 29, which may be very simple in structure, can be produced at inexpensive costs and with high productivity.

As shown in Fig. 3, the sealing device 25 with the seal member 29 is arranged for sealing upstream, in the exhaust gas flow, of a through-hole 16' (i.e., at the scroll passage 8 side) via which each vane shaft 16b extends through the rear exhaust guide wall 11 so that due to the fact that the pressure in the gap 19 downstream of the seal member 29 is lower than the pressure of the exhaust gas flowing through the exhaust nozzle 9, the exhaust gas in the exhaust nozzle 9 flows through the through-hole 16' for the vane shaft 16b into the gap 19; moreover, due to the pressure difference between the pressure in the exhaust nozzle 9 and the pressure in the gap 19, the nozzle vane 15 is urged and displaced to the rear exhaust guide wall 11 so that a flange 16" on the vane shaft 16b is pushed to the rear wall 11 to close the through-hole 16'. As a result, the gas in the exhaust nozzle 9 is prevented from flowing through the through-hole 16' for the vane shaft 16b into the gap 19, thereby enhancing the sealability.

It is to be understood that the present invention is not limited to the above embodiments and that various changes and modifications may be made without leaving the scope of the invention.

### Industrial Applicability

With the invention, the turbocharger is provided with a seal member which is utilized for enhancement of the sealability of the turbocharger, the seal member being configured such that, by the action of the gas pressure in the scroll passage, the outer peripheral end approaches the rear surface of the exhaust nozzle, the slit ends approach to each other and the inner peripheral end approaches the turbine housing, leading to reduction in diameter of the member.

## Claims

1. A turbocharger having an exhaust nozzle between a scroll passage of a turbine housing and a turbine impeller, a gap between a rear surface of said exhaust nozzle and said turbine housing and a sealing device for closing said gap, **characterized in that** said sealing device comprises a seal member in the form of an annulus partly cut out for provision of a slit and having an inner peripheral end arranged along said turbine housing, said seal member being configured such that, by the action of gas pressure in the scroll passage, an outer peripheral end of the member approaches the rear surface of the exhaust nozzle, slit ends of the member approach to each other and an inner peripheral end of the member approaches said turbine housing, resulting in decrease in diameter of the member.

2. A turbocharger as claimed in claim 1 **characterized in that** said slit is formed to have distance at the outer peripheral end greater than that at the inner peripheral end.

3. A turbocharger as claimed in claim 1 or 2 **characterized in that** said seal member is substantially frustoconical to have diameter gradually increased from turbine housing side to exhaust nozzle side.
